# EUROPEAN PATENT APPLICATION

(11) **EP 4 729 406 A1**
(43) Date of publication of application: **22.04.2026**
(21) Application number: 25194446.8
(22) Date of filing: 06.08.2025
(51) Int. Cl.: B63H 9/02

(54) **VESSEL**

(30) Priority: 18.10.2024 JP 2024184299
(71) Applicant: Sumitomo Heavy Industries Marine & Engineering Co., Ltd., Yokosuka-shi, Kanagawa, 237-8555 (JP)
(72) Inventor: MASUTANI, Akihiko, Kanagawa, 237-8555, (JP)
(74) Representative: Louis Pöhlau Lohrentz

(57) **Abstract**

A vessel (1) capable of sailing in a desired direction only by an operation of a wind propulsion unit is provided. A vessel (1) includes a plurality of rotor sails (10, 10A, 10B, 10C, 10D) (wind propulsion units) provided in a hull (11). In addition, the vessel (1) generates a turning moment (TM) (see FIG. 2B) using the plurality of rotor sails (10, 10A, 10B, 10C, 10D). Such a vessel (1) can generate different amounts of thrust at the individual rotor sails (10, 10A, 10B, 10C, 10D), to generate different moments at respective positions around a center of gravity (G) of the hull (11) and to bring the moment of the overall hull (11) into an unbalanced state. In this manner, the vessel (1) can generate the turning moment (TM) using the plurality of rotor sails (10, 10A, 10B, 10C, 10D) without relying on mechanical means such as a propulsion device and a rudder, and can perform turning using the turning moment (TM). Therefore, the vessel (1) can change a direction of the hull (11) to a desired direction using only the plurality of rotor sails (10, 10A, 10B, 10C, 10D).

## Description

### BACKGROUND OF THE INVENTION

### Field of the Invention

The present invention relates to a vessel.

### Description of Related Art

In recent years, a vessel that generates thrust using renewable energy such as wind power is known in order to reduce a greenhouse gas (GHG) such as CO₂. For example, a vessel disclosed in Japanese Unexamined Patent Publication No. 2020-45018 is provided with, on a hull, a wind propulsion unit that propels the hull using wind power in addition to a propeller-driven propulsion device.

### SUMMARY OF THE INVENTION

Here, in the above-described vessel, it is necessary to use a rudder, a propulsion device, or the like to change a direction of the vessel to a desired direction. Therefore, it is required for the vessel to sail in a desired direction only by an operation of a wind propulsion unit.

Therefore, an object of the present invention is to provide a vessel capable of sailing in a desired direction only by an operation of a wind propulsion unit.

A vessel according to an aspect of the present invention includes a hull, and a plurality of wind propulsion units provided in the hull, in which the vessel performs turning by generating a turning moment using the plurality of wind propulsion units.

The vessel according to the aspect of the present invention includes the plurality of wind propulsion units provided in the hull. In addition, the vessel generates the turning moment using the plurality of wind propulsion units. Such a vessel can generate different amounts of thrust at the individual wind propulsion units to generate different moments at respective positions around a center of gravity of the hull and to bring the moment of the overall hull into an unbalanced state. In this manner, the vessel can generate the turning moment using the plurality of wind propulsion units without relying on mechanical means such as a propulsion device and a rudder, and can perform turning using the turning moment. Therefore, the vessel can change a direction of the hull to a desired direction using only the plurality of wind propulsion units. From the above, the vessel can sail in a desired direction only by the operation of the wind propulsion units.

The wind propulsion unit may be a rotor sail. The rotor sail can easily obtain a desired thrust by adjusting a rotation direction and a rotation speed. Therefore, in a case where a control unit performs turning control, the control unit can easily generate the turning moment using the rotor sail that can be easily controlled.

An operation of the turning may include turning modes of tacking and jibing. The tacking is an operation that is easy to perform, but is an upwind operation, so that the vessel may decelerate during the operation, resulting in moments when the speed is reduced. In contrast, the jibing traces a longer track, but the jibing is a downwind operation, and thus the speed of the vessel increases. In this way, the vessel can perform appropriate sailing in accordance with a situation by using the tacking and the jibing depending on the situation.

The vessel may switch the turning mode between the tacking and the jibing, based on sea conditions. In this case, the vessel can perform turning in an appropriate turning mode out of the tacking and the jibing in accordance with the sea conditions. Accordingly, the vessel can perform appropriate sailing in accordance with the situation.

An operation of the turning may include an intermediate position of the operation, and directions of the plurality of wind propulsion units during the operation of the turning may be oriented in opposite directions with respect to the intermediate position. In this case, it is possible to create a similar operation pattern in which the directions of the wind propulsion units are oriented in opposite directions before and after the intermediate position serving as a reference. Therefore, a load for the operation of the turning can be reduced.

The hull may be provided with the plurality of wind propulsion units that are arranged in a front-rear direction between a bow side and a stern side. The vessel has a longitudinal direction in the front-rear direction, and thus the wind propulsion unit can be provided at a position far from the center of gravity of the hull in the front-rear direction. Therefore, the moment due to the thrust of each of the wind propulsion units is likely to be generated. Accordingly, it is possible to easily generate the turning moment around the center of gravity of the hull.

The vessel may generate the turning moment by making lift generated by the wind propulsion unit located farthest from a center of gravity of the hull greater than lift generated by the other wind propulsion units. In this case, it is possible to efficiently generate the turning moment using the wind propulsion unit farthest from the center of gravity.

According to the present invention, it is possible to provide the vessel capable of sailing in a desired direction only by the operation of the wind propulsion units.

### BRIEF DESCRIPTION OF THE DRAWINGS

FIG. 1 is a schematic cross-sectional view showing an example of a vessel according to an embodiment of the present invention.
FIG. 2A is a diagram showing a principle of a rotor sail, and FIG. 2B is a plan view of the vessel.
FIG. 3 is a block diagram showing a system configuration of the vessel.
FIG. 4A is a diagram showing a tacking operation, and FIG. 4B is a diagram showing a jibing operation.
FIG. 5 is a diagram showing each track position during the jibing.
FIG. 6 is a diagram showing operation contents of each rotor sail at each track position during the jibing.
FIG. 7 is a diagram showing each track position during the tacking.
FIG. 8 is a diagram showing operation contents of each rotor sail at each track position during the tacking.
FIGS. 9A and 9B are diagrams showing a vessel including a plurality of rigid wing sails.
FIG. 10 is a diagram showing the operation contents of each rotor sail at each track position during the jibing.
FIG. 11 is a diagram showing each track position during the tacking.
FIG. 12 is a conceptual diagram showing a lateral force generated by each wind propulsion unit.
FIGS. 13A and 13B are conceptual diagrams showing the lateral force generated by each wind propulsion unit.

### DETAILED DESCRIPTION OF THE INVENTION

Hereinafter, preferred embodiments of the present invention will be described with reference to the drawings. In the following description, the terms "front" and "rear" correspond to a traveling direction of a hull, the term "lateral" corresponds to a left-right (width) direction of the hull, and the terms "up" and "down" correspond to an up-down direction of the hull.

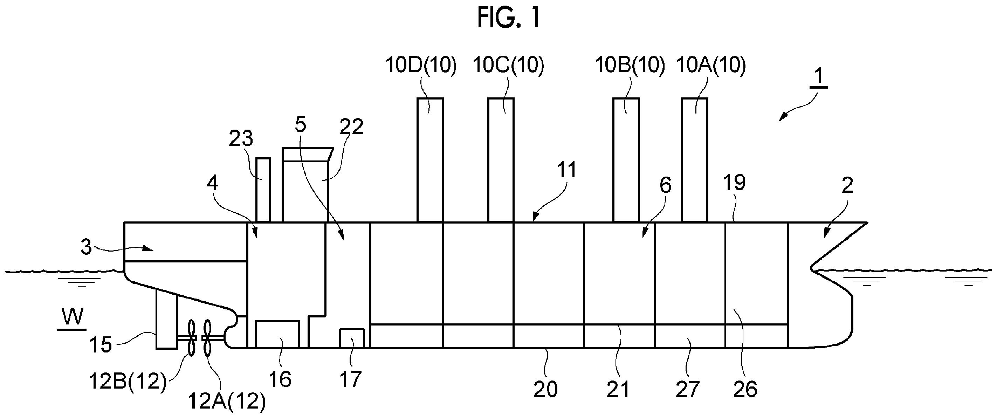

A basic configuration of a vessel according to the embodiment of the present invention will be described with reference to FIG. 1. FIG. 1 is a schematic cross-sectional view showing an example of the vessel according to the embodiment of the present invention. The vessel 1 is a vessel for transporting petroleum-based liquid cargo such as crude oil or liquefied gas, and is, for example, an oil tanker. The vessel is not limited to an oil tanker, and may be, for example, any of various types of vessels, such as a bulk carrier for transporting ore or coal, an LNG carrier, a car carrier, and the like.

As shown in FIG. 1, the vessel 1 includes a hull 11, a propulsion device 12, and a plurality of wind propulsion units. In the present embodiment, the vessel 1 includes a plurality of rotor sails 10 as the plurality of wind propulsion units. The hull 11 has a bow section 2, a stern section 3, an engine room 4, and a cargo hold 6. An upper deck 19 is provided on an upper portion of the hull 11. The bow section 2 is located on a front side of the hull 11. The stern section 3 is located on a rear side of the hull 11.

The propulsion device 12 mechanically generates the thrust of the hull 11, and, for example, a screw propeller is used. The propulsion device 12 is installed below a waterline (water surface of sea W) at the stern section 3 during the propulsion. In addition, an azimuth propulsion device 15 that also functions as a rudder for adjusting a propulsion direction is installed below the waterline at the stern section 3. In the example shown in FIG. 1, the vessel 1 includes a plurality of propulsion devices 12A and 12B. The plurality of propulsion devices 12A and 12B are disposed to face each other in the front-rear direction. The propulsion device 12A is disposed on a bow side with respect to the propulsion device 12B, and is connected to a main engine 16. The number of propulsion devices 12 may be one. In addition, the vessel 1 that propels only using the wind propulsion unit without providing the propulsion device 12 may be adopted.

The engine room 4 is provided at a position adjacent to the bow side of the stern section **3.** The engine room 4 is a compartment for disposing the main engine 16. An accommodation quarter 22 and a funnel 23 are provided above the engine room **4.** A pump room 5 is provided at a position adjacent to the bow side of the engine room **4.** The pump room 5 is a compartment in which a pump 17 or the like is disposed. The cargo hold 6 is provided between the bow section 2 and the engine room **4.** The cargo hold 6 is a compartment for accommodating cargo. The cargo hold 6 is partitioned into a plurality of cargo spaces 26 and a plurality of ballast tanks 27 by adopting a double-hull structure including an outer shell plate 20 and an inner bottom plate 21. In the cargo space 26, cargo transported by the vessel 1 is loaded. The ballast tank 27 accommodates a predetermined amount of ballast water in accordance with a size of the vessel or the like in order to adjust the draft or the like.

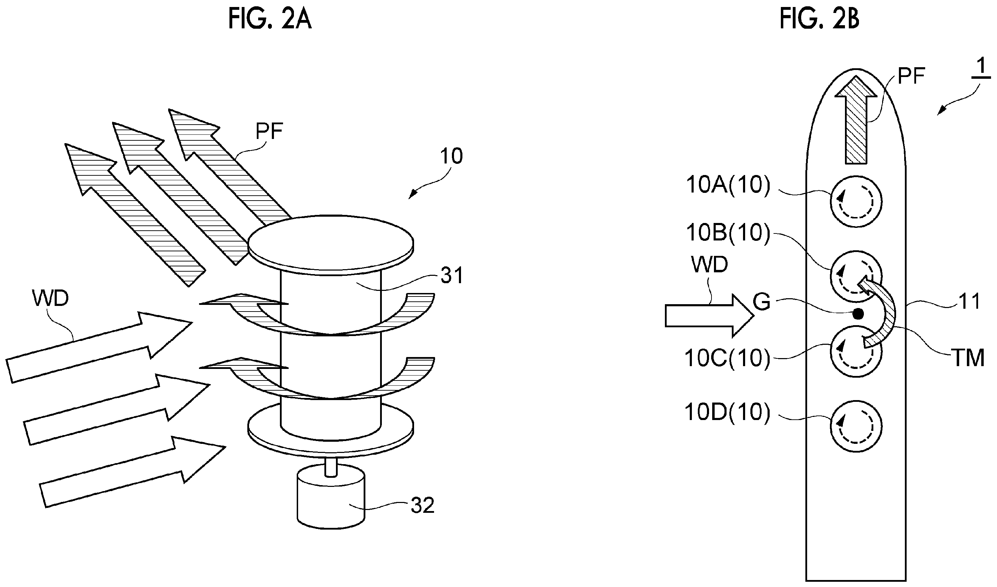

The rotor sail 10 is a mechanism that generates the thrust by receiving wind power. Accordingly, the rotor sail 10 propels the hull 11 using the wind power. A single or a plurality of (here, four) rotor sails 10 are provided on the upper deck 19 of the hull 11 in the front-rear direction and the left-right direction. As shown in FIG. 2A, the rotor sail 10 includes a columnar rotor sail body 41 (main body) extending in the up-down direction, and an electric motor that rotates the rotor sail body 41. When wind WD blows against the rotor sail body 41 from the lateral side, a rotation direction of the rotor sail body 41 and a direction of the wind WD are oriented in opposite directions on the rear side, and the rotation direction of the rotor sail body 41 and the direction of the wind WD coincide with each other on the front side. Accordingly, a pressure difference is generated between the front side and the rear side of the rotor sail body 41, and thus thrust PF toward the front side is generated (Magnus effect). As shown in FIG. 2B, the wind WD blows against the hull 11 from the lateral side, and thus the hull 11 moves forward due to the thrust PF of each rotor sail 10.

As shown in FIG. 2B, the hull 11 is provided with the plurality of rotor sails 10 (wind propulsion units) that are arranged in the front-rear direction between the bow side and the stern side. Here, the plurality of rotor sails 10 are referred to as a first rotor sail 10A, a second rotor sail 10B, a third rotor sail 10C, and a fourth rotor sail 10D from the bow. It is assumed that a center of gravity G of the vessel 1 is set between the second rotor sail 10B and the third rotor sail 10C.

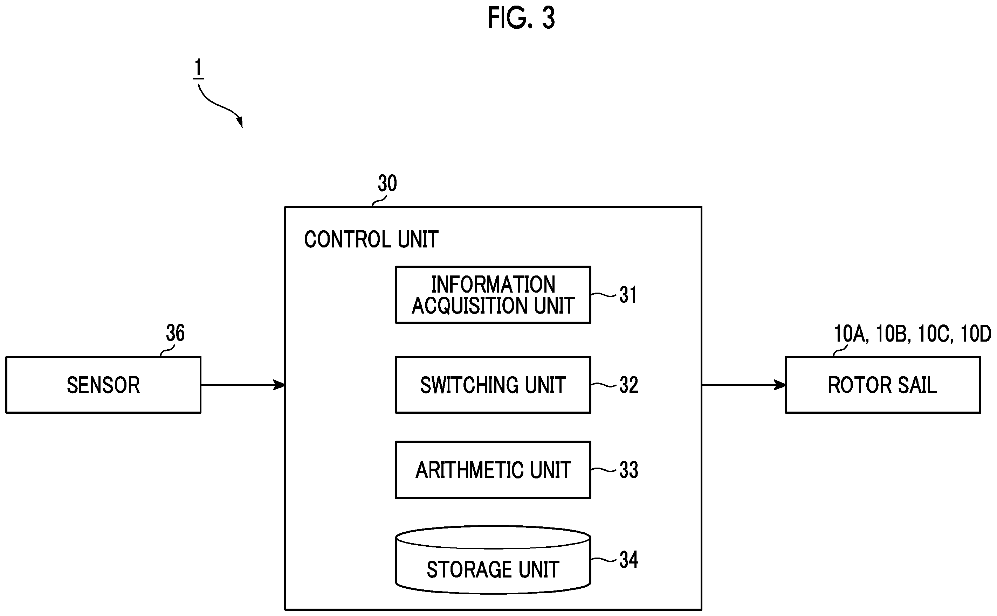

FIG. 3 is a diagram showing a system configuration of the vessel 1. As shown in FIG. 3, the vessel 1 includes a control unit 30. The control unit 30 is configured by, for example, a computer system. For example, the computer system includes a processor (arithmetic circuit), a memory, a communication interface, and a data storage unit. The memory includes, for example, a read-only memory (ROM) and a random-access memory (RAM). The data storage unit includes, for example, a hard disk drive (HDD) or a solid-state drive (SSD). The control unit 30 may be configured by, for example, a microcontroller or an integrated circuit.

The control unit 30 performs various computation processes by, for example, executing a program stored in the memory on a CPU. With this process, the control unit 30 includes the functional elements shown in FIG. 3. That is, the control unit 30 includes an information acquisition unit 31, a switching unit 32, an arithmetic unit 33, and a storage unit 34. The control unit 30 acquires detection information from a sensor 36. The sensor 36 detects, for example, at least a wind direction and a wind volume of the wind WD (see FIG. 2B). In addition, the sensor 36 detects sea conditions. The control unit 30 transmits a control signal to the rotor sails 10A, 10B, 10C, and 10D. The control unit 30 controls the rotation directions and the rotation speeds of the rotor sails 10A, 10B, 10C, and 10D. The control unit 30 can control the rotor sails 10A, 10B, 10C, and 10D independently. Therefore, the rotation direction and the rotation speed are set individually for the rotor sails 10A, 10B, 10C, and 10D.

In the present embodiment, the vessel 1 performs turning by generating a turning moment TM (see FIG. 2B) using the plurality of rotor sails 10A, 10B, 10C, and 10D. Specifically, the control unit 30 generates the turning moment TM by intentionally unbalancing the moments of each thrust around the center of gravity G of the hull with respect to the thrust generated individually by the rotor sails 10A, 10B, 10C, and 10D. In this way, the control unit 30 makes it possible to change a course of the vessel 1 by generating the turning moment TM. The control unit 30 controls the rotation directions and the rotation speeds of the plurality of rotor sails 10A, 10B, 10C, and 10D with temporal offsets in order to achieve "course stabilization", "course destabilization/turning", and "course stabilization" in a time sequence.

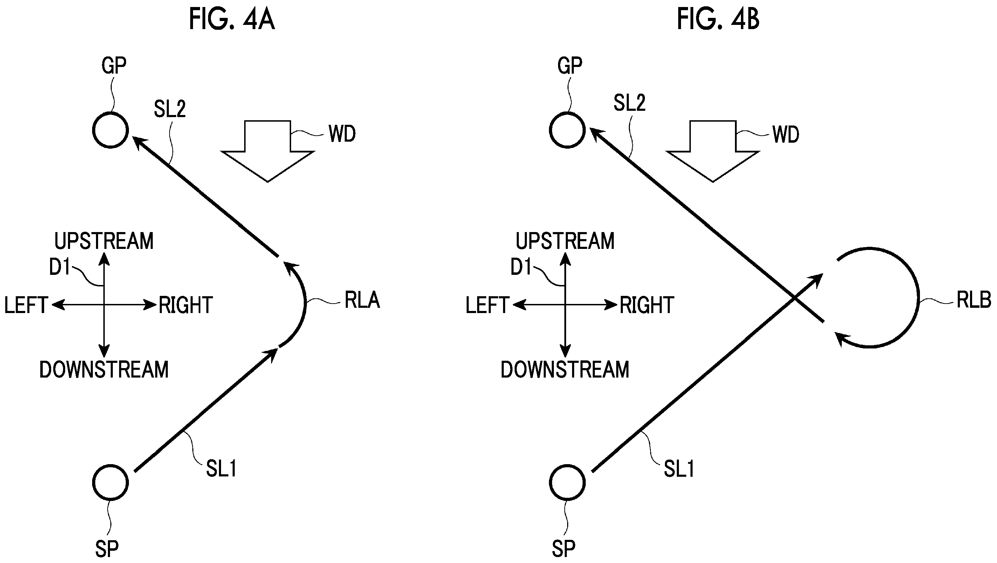

The vessel 1 includes turning modes of tacking and jibing as the operation of the turning. Here, FIG. 4A is a diagram showing a tacking operation, and FIG. 4B is a diagram showing a jibing operation. In FIGS. 4A and 4B, a target course that the vessel 1 is directed is denoted by D1. A side toward the target course D1 is referred to as "upstream", and an opposite side is referred to as "downstream". In addition, the terms "right" and "left" are used with reference to the target course D1. The vessel 1 proceeds toward the target course D1 as a whole by repeatedly performing the tacking or the jibing. FIGS. 4A and 4B show the tacking or jibing operation per one time. In the tacking or the jibing per one time, the vessel 1 moves from a start position SP to a goal position GP. The goal position GP is set at a position upstream of the start position SP in the target course D1. In addition, in FIGS. 4A and 4B, the wind direction of the wind WD is a direction from the upstream side to the downstream side in the target course D1.

As shown in FIG. 4A, in the turning mode of the tacking, the vessel 1 proceeds along a straight track SL1 that extends diagonally to the right toward the upstream side from the start position SP. Next, the vessel 1 turns along a turning track RLA. Next, the vessel 1 proceeds along a straight track SL2 that extends diagonally to the left toward the upstream side. The turning track RLA turns counterclockwise, tracing an arc of less than half a circle. A position at which the turning track RLA is switched to the straight track SL2 is disposed upstream of a position at which the straight track SL1 is switched to the turning track RLA. As shown in FIG. 4B, in the turning mode of the jibing, the vessel 1 proceeds along the straight track SL1 that extends diagonally to the right toward the upstream side from the start position SP. Next, the vessel 1 turns along a turning track RLB. Next, the vessel 1 proceeds along the straight track SL2 that extends diagonally to the left toward the upstream side. The turning track RLB turns clockwise, tracing an arc of at least half a circle. A position at which the turning track RLB is switched to the straight track SL2 is disposed downstream of a position at which the straight track SL1 is switched to the turning track RLB. In addition, FIGS. 4A and 4B show an example in which the vessel 1 proceeds toward the target course D1 so as to detour rightward, but the vessel 1 may proceed toward the target course D1 so as to detour leftward. In this way, the vessel 1 proceeds along the target course D1 by repeating the operation of the rightward detour and the operation of the leftward detour.

As shown in FIG. 3, the information acquisition unit 31 acquires various types of information for controlling the vessel 1. The information acquisition unit 31 acquires the detection information detected by the sensor 36. In addition, the information acquisition unit 31 also acquires information related to sea conditions, such as a weather forecast.

The switching unit 32 switches the turning mode between the tacking and the jibing based on the sea conditions. The switching unit 32 takes into account sea conditions such as weather, wind strength, wind direction and variations, wave height, wave period, and other factors such as tidal currents. For example, in a case where the waves are gentle, the switching unit 32 may switch to the turning mode of the tacking in which the turning can quickly performed. In a case where the waves are intense and the risk of stalling is high, the switching unit 32 may switch to the turning mode of the jibing in which stalling is less likely to occur.

The arithmetic unit 33 performs various computation processes in the control unit 30. The arithmetic unit 33 calculates control contents for the rotor sails 10A, 10B, 10C, and 10D to execute the turning mode set by the switching unit 32. The arithmetic unit 33 reads out an operation program in each turning mode stored in the storage unit 34, and performs calculation for executing the operation program. The arithmetic unit 33 transmits the control signal obtained by the calculation to each of the rotor sails 10A, 10B, 10C, and 10D.

The storage unit 34 stores various types of information. The storage unit 34 stores the operation program in each turning mode. The storage unit 34 may store a plurality of operation programs in accordance with the wind direction and the wind speed of the wind WD blowing against the vessel 1. The operation program stores each position in the track during the tacking and the jibing, and the rotation direction and the rotation speed of each of the rotor sails 10A, 10B, 10C, and 10D.

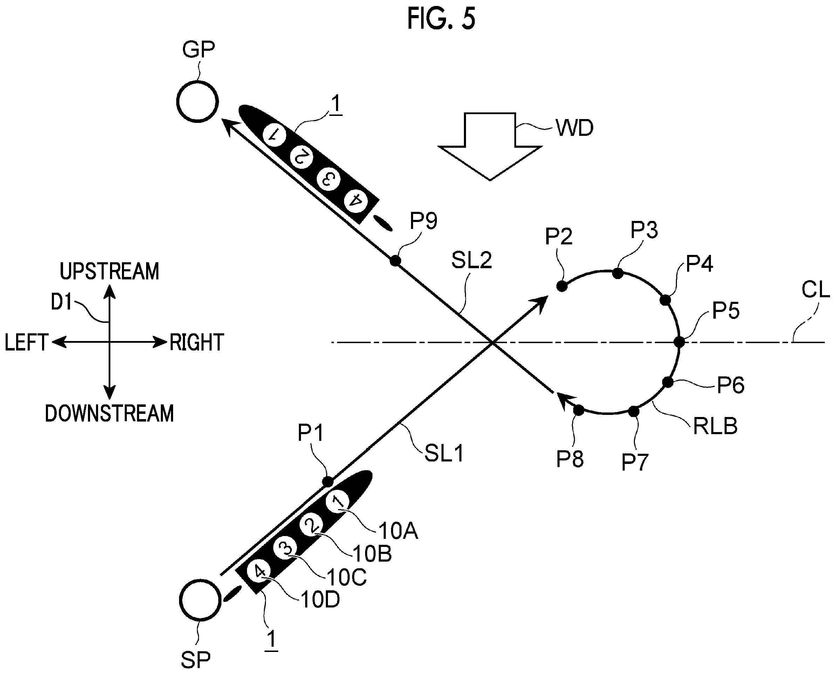

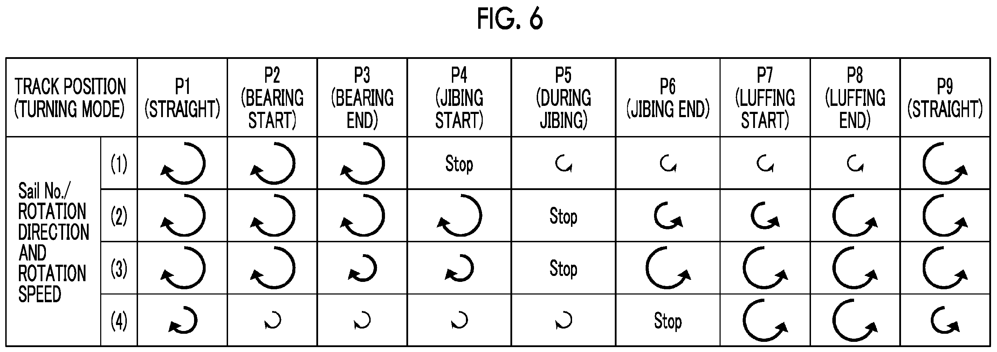

Next, the control contents in the turning mode of the jibing will be described with reference to FIGS. 5 and 6. In FIGS. 5 and 6, the rotor sails 10A, 10B, 10C, and 10D are given sail numbers "1", "2", "3", and "4", respectively. In addition, track positions P1 to P9 are set for the track. The track position P1 is set at any position of the straight track SL1. The track position P2 is set at the position at which the straight track SL1 is switched to the turning track RLB. The track position P2 is a position at which the bearing operation is started ("bearing start"). The track position P3 is set in the vicinity of a position at which the vessel 1 faces the right side in the vicinity of the end portion on the upstream side in the turning track RLB. The track position P4 is a position at which the bearing operation ends ("bearing end"). The track position P4 is set at a position at which the vessel 1 is diagonally directed to the right toward the downstream side in the turning track RLB. At the same time, the track position P4 is a position at which the jibing operation of turning toward the downwind side is started ("jibing start"). The track position P5 is set at a position at which the vessel 1 completely faces the downstream side (the same direction as the wind WD) in the turning track RLB. The track position P5 is an intermediate position during the jibing operation ("during jibing"). The track position P5 corresponds to an intermediate position of the operation during the turning operation of the tracks SL1, RLB, and SL2. The track position P6 is set at a position at which the vessel 1 is diagonally directed to the left toward the downstream side in the turning track RLB. The track position P6 is a position at which the jibing operation of turning toward the downwind side ends ("jibing end"). The track position P7 is set in the vicinity of a position at which the vessel 1 faces the left side in the vicinity of the end portion on the downstream side in the turning track RLB. At the same time, the track position P7 is a position at which the luffing operation is started ("luffing start"). The track position P8 is set at the position at which the turning track RLB is switched to the straight track SL2. The track position P8 is a position at which the luffing operation ends ("luffing end"). The track position P9 is set at any position of the straight track SL2.

A combination of the rotation direction and the rotation speed of each of the rotor sails 10A, 10B, 10C, and 10D at the track positions P1 to P9 will be described with reference to FIG. 6. These operation contents are examples of data stored in the storage unit 34. In addition, FIG. 6 shows the rotation speed in three stages of "high", "medium", and "low", but the control may be performed at the rotation speed in a further multi-stage.

As shown in FIG. 6, at the track positions P1 to P4, the rotation direction of each of the rotor sails 10A, 10B, 10C, and 10D is set to clockwise. At the track position P1, the rotation speeds of the first to third rotor sails 10A, 10B, and 10C are set to "high". The rotation speed of the fourth rotor sail 10D is set to "medium". At the track position P2, the rotation speeds of the first to third rotor sails 10A, 10B, and 10C are set to "high". The rotation speed of the fourth rotor sail 10D is set to "low". At the track position P3, the rotation speeds of the first and second rotor sails 10A and 10B are set to "high". The rotation speed of the third rotor sail 10C is set to "medium". The rotation speed of the fourth rotor sail 10D is set to "low". At the track position P4, the first rotor sail 10A is stopped. The rotation speed of the second rotor sail 10B is set to "high". The rotation speed of the third rotor sail 10C is set to "medium". The rotation speed of the fourth rotor sail 10D is set to "low".

At the track position P5, the rotation direction of the first rotor sail 10A is set to counterclockwise, and the rotation speed of the first rotor sail 10A is set to "low". The rotation direction of the fourth rotor sail 10D is set to clockwise, and the rotation speed of the fourth rotor sail 10D is set to "low". The second and third rotor sails 10B and 10C are stopped.

At the track positions P6 to P9, the rotation direction of each of the rotor sails 10A, 10B, 10C, and 10D is set to counterclockwise. At the track position P6, the fourth rotor sail 10D is stopped. The rotation speed of the third rotor sail 10C is set to "high". The rotation speed of the second rotor sail 10B is set to "medium". The rotation speed of the first rotor sail 10A is set to "low". At the track position P7, the rotation speeds of the third and fourth rotor sails 10C and 10D are set to "high". The rotation speed of the second rotor sail 10B is set to "medium". The rotation speed of the first rotor sail 10A is set to "low". At the track position P8, the rotation speeds of the second to fourth rotor sails 10B, 10C, and 10D are set to "high". The rotation speed of the first rotor sail 10A is set to "low". At the track position P9, the rotation speeds of the first to third rotor sails 10A, 10B, and 10C are set to "high". The rotation speed of the fourth rotor sail 10D is set to "medium".

In the example shown in FIG. 6, the directions of the plurality of wind propulsion units during the turning operation are oriented in opposite directions with respect to the track position P5 that is the intermediate position. A reference line CL is set in a direction perpendicular to the direction of the wind WD with respect to the track position P5 (see FIG. 5). In this case, with reference to the reference line CL, the track positions P2 and P8 are disposed to form a pair, the track positions P3 and P7 are disposed to form a pair, and the track positions P4 and P6 are disposed to form a pair. In the turning track RLB, the rotation directions of the rotor sails 10A, 10B, 10C, and 10D at the track positions P2 to P4 before the track position P5, which is the intermediate position, are opposite to the rotation directions of the rotor sails 10A, 10B, 10C, and 10D at the track positions P6 to P8 after the track position P5, which is the intermediate position.

Here, the first rotor sail 10A and the fourth rotor sail 10D are in a symmetrical positional relationship with respect to the center of gravity G of the hull, and the second rotor sail 10B and the third rotor sail 10C are in a symmetrical positional relationship with respect to the center of gravity G of the hull (see FIG. 2B). The behavior of the rotor sails 10A, 10B, 10C, and 10D at any track position on the turning track RLB is the same as the behavior of the rotor sails 10A, 10B, 10C, and 10D in a symmetrical positional relationship at the paired track position. Specifically, as shown in FIG. 6, the behavior of the first rotor sail 10A at the track position P4 is stopped, as well as the behavior of the fourth rotor sail 10D at the paired track position P6. The behavior of the second rotor sail 10B at the track position P4 is the same as the behavior of the third rotor sail 10C at the paired track position P6, and the rotation speed is "high". The behavior of the third rotor sail 10C at the track position P4 is the same as the behavior of the second rotor sail 10B at the paired track position P6, and the rotation speed is "medium". The behavior of the fourth rotor sail 10D at the track position P4 is the same as the behavior of the first rotor sail 10A at the paired track position P6, and the rotation speed is "low". Such a relationship also holds between the track position P3 and the track position P7, and also holds between the track position P2 and the track position P8.

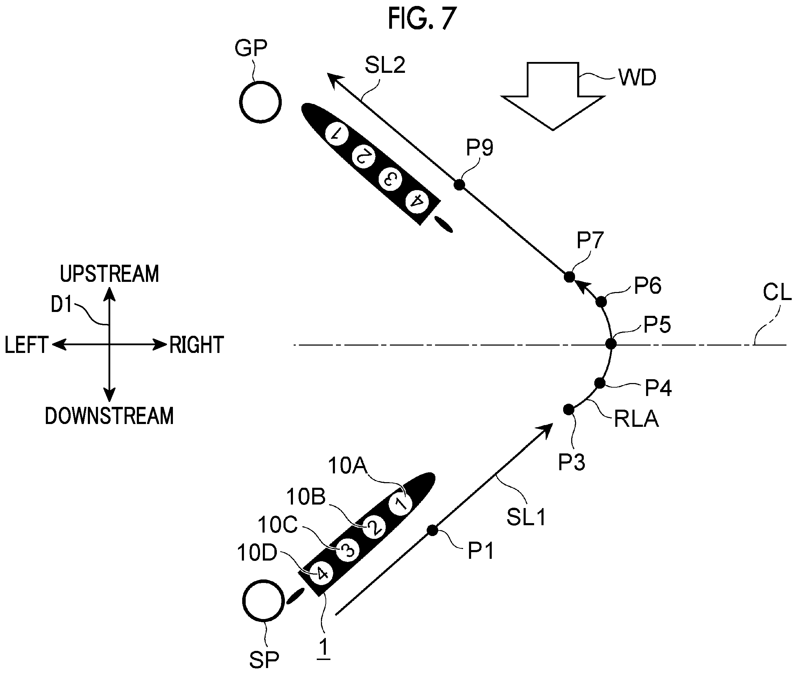

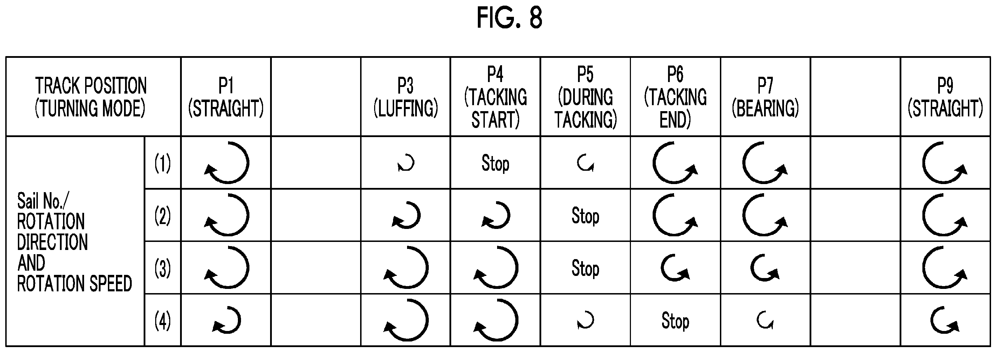

Next, the control contents in the turning mode of the tacking will be described with reference to FIGS. 7 and 8. The track position P1, P3 to P7, and P9 is set for the track. The track position P1 is set at any position of the straight track SL1. The track position P3 is set at a position at which the straight track SL1 is switched to the turning track RLA, and represents a process of luffing the vessel 1 as a preliminary stage of the tacking. The track position P4 is a position at which the tacking operation is started ("tacking start"). The track position P4 is set at a position at which the vessel 1 is diagonally directed to the right toward the upstream side in the turning track RLA. The track position P5 is set at a position at which the vessel 1 completely faces the upstream side (the opposite direction to the wind WD) in the turning track RLA. The track position P5 is an intermediate position during the tacking operation ("during the tacking"). The track position P5 corresponds to an intermediate position of the operation during the turning operation of the tracks SL1, RLA, and SL2. The track position P6 is set at a position at which the vessel 1 is diagonally directed to the left toward the upstream side in the turning track RLA ("tacking end"). The track position P7 is a position at which the turning mode ends ("bearing"). At the same time, the track position P7 is set at the position at which the turning track RLA is switched to the straight track SL2. The track position P9 is set at any position of the straight track SL2.

A combination of the rotation direction and the rotation speed of each of the rotor sails 10A, 10B, 10C, and 10D at the track positions P1, P3 to P7, and P9 will be described with reference to FIG. 8. These operation contents are examples of data stored in the storage unit 34. In addition, FIG. 8 shows the rotation speed in three stages of "high", "medium", and "low", but the control may be performed at the rotation speed in a further multi-stage.

As shown in FIG. 8, at the track positions P1 and P3 to P4, the rotation direction of each of the rotor sails 10A, 10B, 10C, and 10D is set to clockwise. At the track position P1, the rotation speeds of the first to third rotor sails 10A, 10B, and 10C are set to "high". The rotation speed of the fourth rotor sail 10D is set to "medium". At the track position P3, the rotation speeds of the third and fourth rotor sails 10C and 10D are set to "high". The rotation speed of the second rotor sail 10B is set to "medium". The rotation speed of the first rotor sail 10A is set to "low". At the track position P4, the first rotor sail 10A is stopped. The rotation speed of the second rotor sail 10B is set to "medium". The rotation speeds of the third and fourth rotor sails 10C and 10D are set to "high".

At the track position P5, the rotation direction of the first rotor sail 10A is set to counterclockwise, and the rotation speed of the first rotor sail 10A is set to "low". The rotation direction of the fourth rotor sail 10D is set to clockwise, and the rotation speed of the fourth rotor sail 10D is set to "low". The second and third rotor sails 10B and 10C are stopped.

At the track positions P6 to P7 and P9, the rotation direction of each of the rotor sails 10A, 10B, 10C, and 10D is set to counterclockwise. At the track position P6, the fourth rotor sail 10D is stopped. The rotation speed of the third rotor sail 10C is set to "medium". The rotation speeds of the first and second rotor sails 10A and 10B are set to "high". At the track position P7, the rotation speeds of the first and second rotor sails 10A and 10B are set to "high". The rotation speed of the third rotor sail 10C is set to "medium". The rotation speed of the fourth rotor sail 10D is set to "low". At the track position P9, the rotation speeds of the first to third rotor sails 10A, 10B, and 10C are set to "high". The rotation speed of the fourth rotor sail 10D is set to "medium".

In the example shown in FIG. 8, the directions of the plurality of wind propulsion units during the turning operation are oriented in opposite directions with respect to the track position P5 that is the intermediate position (see FIG. 7). The reference line CL is set in a direction perpendicular to the direction of the wind WD with respect to the track position P5. In this case, with reference to the reference line CL, the track positions P3 and P7 are disposed to form a pair, and the track positions P4 and P6 are disposed to form a pair. In the turning track RLA, the rotation directions of the rotor sails 10A, 10B, 10C, and 10D at the track positions P3 and P4 before the track position P5, which is the intermediate position, are opposite to the rotation directions of the rotor sails 10A, 10B, 10C, and 10D at the track positions P6 and P7 after the track position P5, which is the intermediate position. The behavior of the rotor sails 10A, 10B, 10C, and 10D at any track position on the turning track RLA is the same as the behavior of the rotor sails 10A, 10B, 10C, and 10D in a symmetrical positional relationship at the paired track position.

Next, the operations and effects of the vessel according to the present embodiment will be described.

The vessel 1 according to the present embodiment includes the plurality of rotor sails 10 (wind propulsion unit) provided in the hull 11. In addition, the vessel 1 generates a turning moment TM (see FIG. 2B) using the plurality of rotor sails 10. Such a vessel 1 can generate different amounts of thrust at the individual rotor sails 10, to generate different moments at respective positions around a center of gravity G of the hull 11 and to bring the moment of the overall hull 11 into an unbalanced state. In this manner, the vessel 1 can generate the turning moment TM using the plurality of rotor sails 10 without relying on mechanical means such as a propulsion device and a rudder, and can perform turning using the turning moment TM. Therefore, the vessel 1 can change a direction of the hull 11 to a desired direction using only the plurality of rotor sails 10. From the above, the vessel 1 can sail in a desired direction only by the operation of the rotor sail 10.

The wind propulsion unit may be the rotor sail. The rotor sail 10 can easily obtain a desired thrust by adjusting the rotation direction and the rotation speed. Therefore, in a case where the control unit 30 performs the turning control, the control unit 30 can easily generate the turning moment using the rotor sail 10 that can be easily controlled. For example, rigid wing sails, such as those described below, require constant fine adjustment of the angle of attack to prevent flow separation of airflow from the sail due to changes in wind direction or wind speed, and, when such adjustments cannot be made accurately, flutter of the sail may occur, reaction forces induced by wind when trimming or easing the sail may be experienced, and extraneous forces act during control, so that countermeasures against those forces are necessary, and more precise handling techniques are required when a worker carries out the operation. On the other hand, the rotor sail 10 is easy to control and operate because the rotor sail 10 does not generate the flap or the reaction force, unlike the rigid wing sail.

The operation of the turning may include the turning modes of the tacking and the jibing. The tacking is an operation that is easy to perform, but is an upwind operation, so that the vessel may decelerate during the operation, resulting in moments when the speed is reduced. In contrast, the jibing traces a longer track, but the jibing is a downwind operation, and thus the speed of the vessel is likely to accelerate. In this way, the vessel can perform appropriate sailing in accordance with a situation by using the tacking and the jibing depending on the situation.

The vessel 1 may switch the turning mode between the tacking and the jibing, based on the sea conditions. In this case, the vessel 1 can perform turning in an appropriate turning mode out of the tacking and the jibing in accordance with the sea conditions. Accordingly, the vessel 1 can perform appropriate sailing in accordance with the situation.

The operation of the turning may include an intermediate position of the operation, and the directions of the plurality of rotor sails 10 during the operation of the turning may be oriented in opposite directions with respect to the intermediate position. In this case, it is possible to create a similar operation pattern in which the directions (rotation directions) of the rotor sails 10 are oriented in opposite directions before and after the intermediate position serving as a reference. Therefore, a load for the operation of the turning can be reduced.

The hull 11 may be provided with the plurality of rotor sails 10 that are arranged in the front-rear direction between the bow side and the stern side. The vessel 1 has the longitudinal direction in the front-rear direction, and thus the rotor sail 10 can be provided at a position far from the center of gravity G of the hull in the front-rear direction. Therefore, the moment due to the thrust of each of the rotor sails 10 is likely to be generated. Accordingly, it is possible to easily generate the turning moment around the center of gravity G of the hull.

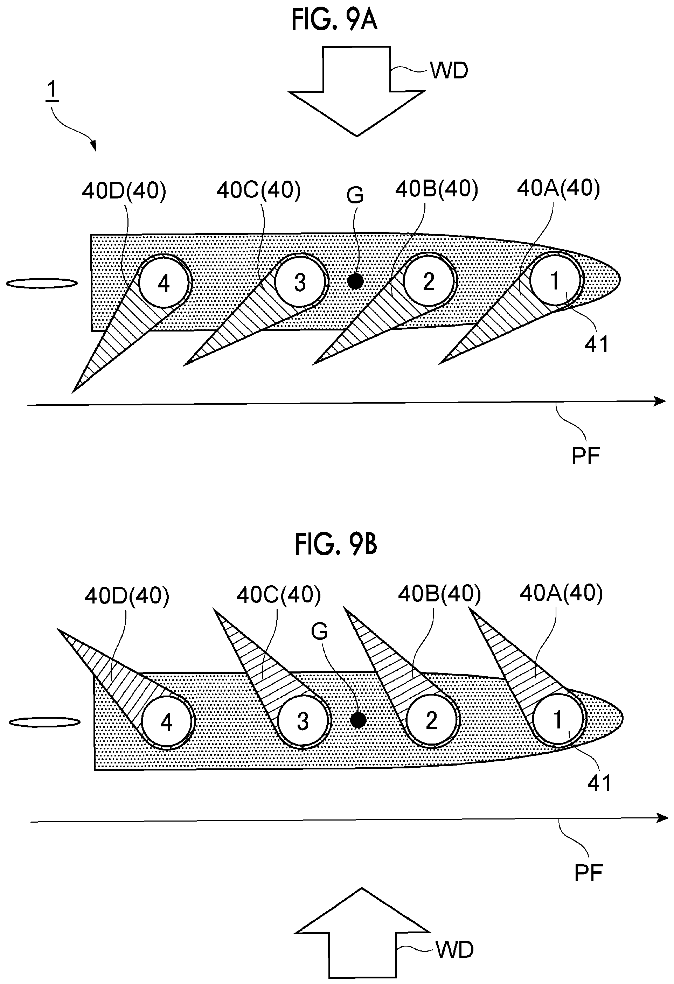

For example, in the above-described embodiment, the rotor sail 10 has been described as the wind propulsion unit, but the type of the wind propulsion unit is not particularly limited, and a rigid wing sail, a soft sail, or other types of sails may be adopted. FIGS. 9A and 9B are schematic diagrams showing an example of the vessel 1 in a case where rigid wing sails 40 are adopted as the wind propulsion units. In addition, even in a case where a fabric sail is used as the wind propulsion unit, the same diagram as FIGS. 9A and 9B is obtained. The rigid wing sails 40 are a first rigid wing sail 40A, a second rigid wing sail 40B, a third rigid wing sail 40C, and a fourth rigid wing sail 40D in order from the bow. FIG. 9A shows an example of a deployment direction of the rigid wing sail 40 when the thrust PF is generated forward when the wind WD blows from the left side. FIG. 9B shows an example of a deployment direction of the rigid wing sail 40 when the thrust PF is generated forward when the wind WD blows from the right side.

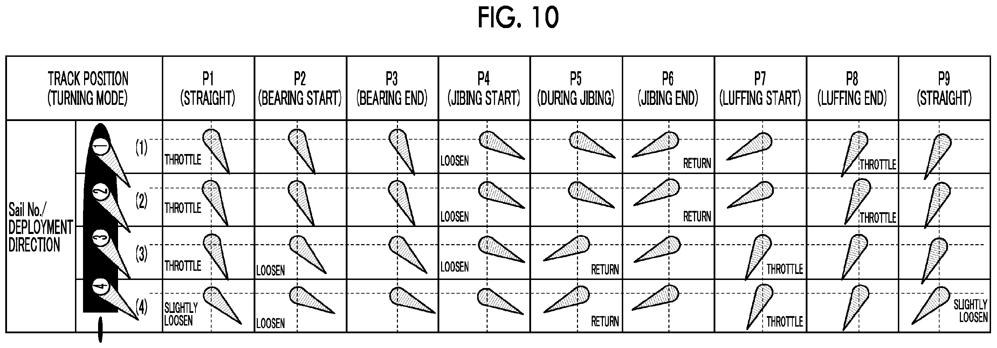

The control contents in the turning mode of the jibing when the rigid wing sail 40 is used will be described with reference to FIG. 10. The track positions P1 to P9 during the jibing are the same as those shown in FIG. 5. **A** combination of the deployment direction and a deployment amount of each of the rigid wing sails 40A, 40B, 40C, and 40D at the track positions P1 to P9 will be described with reference to FIG. 10. These operation contents are examples of data stored in the storage unit 34. In addition, in FIG. 10, the deployment amount is shown in three stages of "large", "medium", and "small", but the control may be performed at the deployment amount in a further multi-stage. The deployment amount is assumed to be the magnitude of the angle of the rigid wing sail 40 relative to the left-right direction. The deployment amount increases by throttling the rigid wing sail 40, and the deployment amount decreases by loosening the rigid wing sail 40.

As shown in FIG. 10, at the track positions P1 to P4, the deployment direction of each of the rigid wing sails 40A, 40B, 40C, and 40D is set to the right side. At the track position P1, the deployment amounts of the first to third rigid wing sails 40A, 40B, and 40C are set to "large". The deployment amount of the fourth rigid wing sail 40D is set to "medium". At the track position P2, the deployment amounts of the first and second rigid wing sails 40A and 40B are set to "large". The deployment amount of the third rigid wing sail 40C is set to "medium". The deployment amount of the fourth rigid wing sail 40D is set to "small". At the track position P3, the deployment amounts of the first and second rigid wing sails 40A and 40B are set to "large". The deployment amount of the third rigid wing sail 40C is set to "medium". The deployment amount of the fourth rigid wing sail 40D is set to "small". At the track position P4, the deployment amounts of the first to fourth rigid wing sails 40A, 40B, 40C, and 40D are set to "small".

At the track position P5, the deployment directions of the first and second rigid wing sails 40A and 40B are set to the right side, and the deployment amounts of the first and second rigid wing sails 40A and 40B are set to "small". The deployment directions of the third and fourth rigid wing sails 40C and 40D are set to the left side, and the deployment amounts of the third and fourth rigid wing sails 40C and 40D are set to "small".

At the track positions P6 to P9, the deployment direction of each of the rigid wing sails 40A, 40B, 40C, and 40D is set to the left side. At the track position P6, the deployment amounts of the first to fourth rigid wing sails 40A, 40B, 40C, and 40D are set to "small". At the track position P7, the deployment amounts of the third and fourth rigid wing sails 40C and 40D are set to "large". The deployment amounts of the first and second rigid wing sails 40A and 40B are set to "small". At the track position P8, the deployment amounts of the first to fourth rigid wing sails 40A, 40B, 40C, and 40D are set to "large". At the track position P9, the deployment amounts of the first to third rigid wing sails 40A, 40B, and 40C are set to "large". The deployment amount of the fourth rigid wing sail 40D is set to "medium".

In the example shown in FIG. 10, the directions of the plurality of sails during the turning operation are oriented in opposite directions with respect to the track position P5 that is the intermediate position. In the turning track RLB, the deployment directions of the rigid wing sails 40A, 40B, 40C, and 40D at the track positions P2 to P4 before the track position P5, which is the intermediate position, are opposite to the deployment directions of the rigid wing sails 40A, 40B, 40C, and 40D at the track positions P6 to P8 after the track position P5, which is the intermediate position.

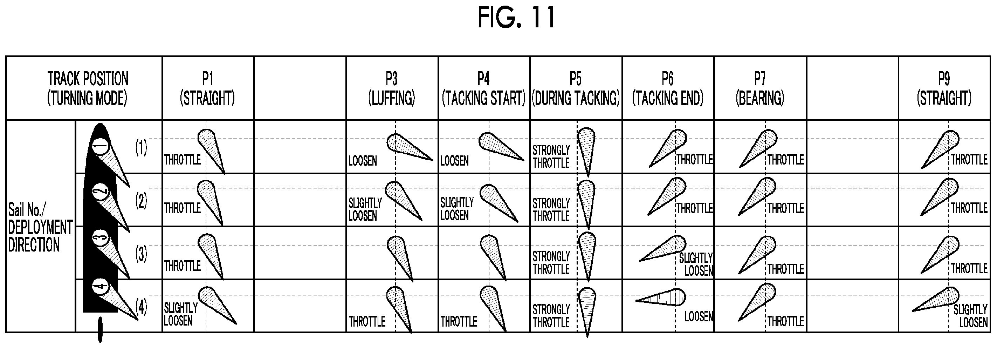

Next, the control contents in the turning mode of the tacking when the rigid wing sail 40 is used will be described with reference to FIG. 11. The track positions P1, P3 to P7, and P9 during the tacking are the same as those shown in FIG. 7. A combination of the deployment direction and a deployment amount of each of the rigid wing sails 40A, 40B, 40C, and 40D at the track positions P1, P3 to P7, and P9 will be described with reference to FIG. 11. These operation contents are examples of data stored in the storage unit 34.

As shown in FIG. 11, at the track positions P1 and P3 to P4, the deployment direction of each of the rigid wing sails 40A, 40B, 40C, and 40D is set to the right side. At the track position P1, the deployment amounts of the first to third rigid wing sails 40A, 40B, and 40C are set to "large". The deployment amount of the fourth rigid wing sail 40D is set to "medium". At the track position P3, the deployment amounts of the third and fourth rigid wing sails 40C and 40D are set to "large". The deployment amount of the second rigid wing sail 40B is set to "medium". The deployment amount of the first rigid wing sail 40A is set to "small". At the track position P4, the deployment amount of the first rigid wing sail 40A is set to "small". The deployment amount of the second rigid wing sail 40B is set to "medium". The deployment amounts of the third and fourth rigid wing sails 40C and 40D are set to "large".

At the track position P5, the first to fourth rigid wing sails 40A, 40B, 40C, and 40D are strongly throttled, and thus the rigid wing sails 40A, 40B, 40C, and 40D are deployed in a direction along the front-rear direction.

At the track positions P6 to P7 and P9, the deployment direction of each of the rigid wing sails 40A, 40B, 40C, and 40D is set to the left side. At the track position P6, the deployment amount of the fourth rigid wing sail 40D is set to "small". The deployment amount of the third rigid wing sail 40C is set to "medium". The deployment amounts of the first and second rigid wing sails 40A and 40B are set to "large". At the track position P7, the deployment amounts of the first to fourth rigid wing sails 40A, 40B, 40C, and 40D are set to "large". At the track position P9, the deployment amounts of the first to third rigid wing sails 40A, 40B, and 40C are set to "large". The deployment amount of the fourth rigid wing sail 40D is set to "medium".

In the example shown in FIG. 11, the directions of the plurality of sails during the turning operation are oriented in opposite directions with respect to the track position P5 that is the intermediate position. In the turning track RLA, the deployment directions of the rigid wing sails 40A, 40B, 40C, and 40D at the track positions P3 and P4 before the track position P5, which is the intermediate position, are opposite to the deployment directions of the rigid wing sails 40A, 40B, 40C, and 40D at the track positions P6 and P7 after the track position P5, which is the intermediate position.

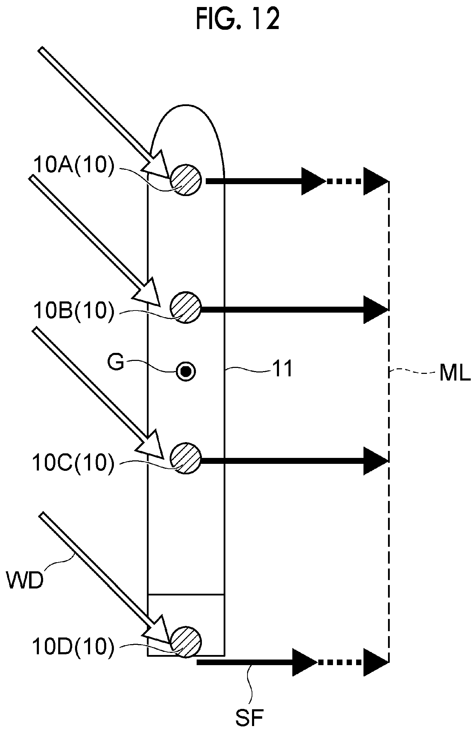

Here, the lift of the wind propulsion unit may be adjusted at a distance farthest from the center of gravity G of the hull 11. For example, as shown in FIG. 12, in a case where the rotor sail 10D generates the lift due to the wind WD, a component of the lift in the lateral direction is the lateral force SF. The lift of the rotor sails 10A and 10D on the end portion side is smaller than the lift of the other rotor sails 10B and 10C. In this case, when the magnitude of the maximum lateral force SF (the lateral force when the rotation speed is maximized) of the rotor sails 10B and 10C is indicated by a dashed line ML extending in the front-rear direction, the lateral force SF of the rotor sails 10A and 10D is smaller than the maximum lateral force SF. In FIG. 12, only a portion of the lateral force SF of the rotor sails 10A and 10D, which is indicated by a dashed line, is smaller than the other lateral forces. Here, when the turning moment by each rotor sail 10 is defined as "lateral force × distance from the center of gravity G of the hull", the total of the turning moments of all the rotor sails 10A, 10B, 10C, and 10D is the turning moment by the rotor sails 10A, 10B, 10C, and 10D. By making the turning moment of the hull 11 unbalanced with respect to the turning moments generated by the rotor sails 10A, 10B, 10C, and 10D, the hull 11 can be turned.

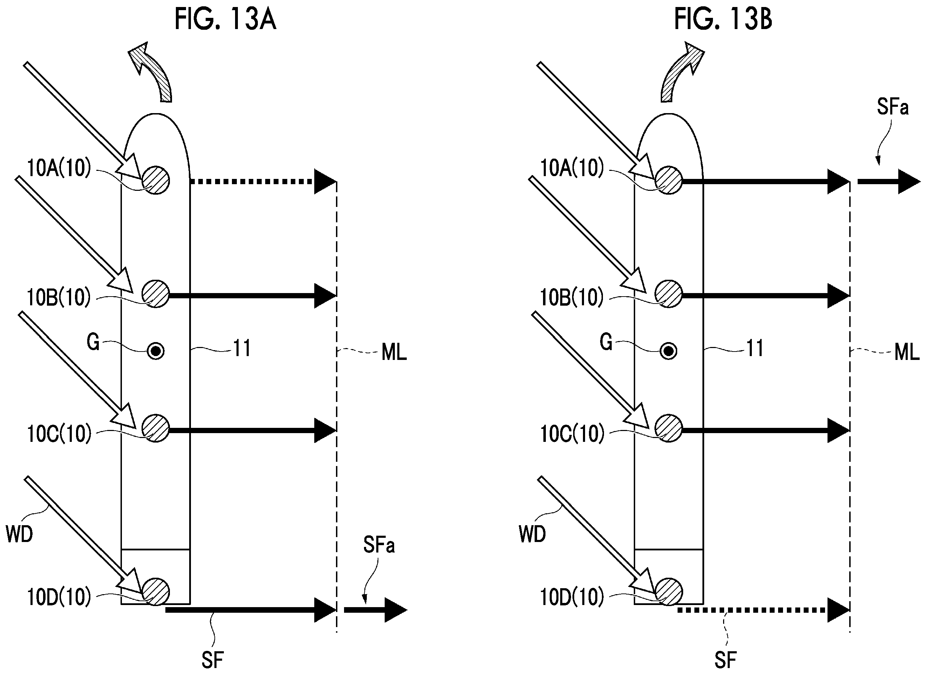

In addition, as shown in FIGS. 13A and 13B, the vessel may generate the turning moment by making the lift generated by the wind propulsion unit located farthest from the center of gravity G of the hull 11 greater than the lift generated by the other wind propulsion units. In this case, it is possible to efficiently generate the turning moment using the wind propulsion unit farthest from the center of gravity G of the hull. In the example shown in FIG. 13A, the lateral force SF of the rotor sail 10A decreases, and the lateral force SF of the rotor sail 10D on the opposite side is set to be larger than the other lateral forces SF. Here, the lateral force SF of the rotor sail 10D increases by an amount shown in "SFa". Accordingly, the hull 11 turns to the left side due to the influence of the turning moment. In the example shown in FIG. 13B, the lateral force SF of the rotor sail 10D decreases, and the lateral force SF of the rotor sail 10A on the opposite side is set to be larger than the other lateral forces SF. Here, the lateral force SF of the rotor sail 10A increases by an amount shown in "SFa". Accordingly, the hull 11 turns to the right side due to the influence of the turning moment.

Here, the method of adjusting the lift of the rotor sails 10A and 10D is not particularly limited. In a case of the rotor sails 10A and 10D, the lift of the rotor sails 10A and 10D may be increased by designing such that the maximum rotation speed is higher than the maximum rotation speed of the rotor sails 10B and 10C. In this case, the operation as shown in FIGS. 13A and 13B can be performed by controlling the rotation speeds of the rotor sails 10A and 10D. Alternatively, the lift may be increased by increasing the output of the rotor sails 10A and 10D. For example, rotor sail diameters or dimensions in a height direction of the rotor sails 10A and 10D may be larger than those of the rotor sails 10B and 10C. In this case, even when the rotation speeds of the rotor sails 10A, 10B, 10C, and 10D are the same as each other, the output of the rotor sails 10A and 10D is larger than the output of the rotor sails 10B and 10C, so that large lift can be generated.

In a case where a rigid sail or a fabric sail is adopted as the wind propulsion unit, large lift can be generated by increasing an area of a wind receiving portion. In addition, in a case where a suction wing is adopted as the wind propulsion unit, the lift may be generated by adjusting an amount of air sucked at the rear end of the wing.

In the above-described embodiment, the control unit 30 operates the wind propulsion unit, but the worker may operate the wind propulsion unit. In this case, the vessel 1 may output the operation contents of each of the wind propulsion units at each of the track positions stored in the storage unit 34 to the worker on a monitor or the like.

The examples of the operations shown in FIGS. 6, 8, 10, and 11 are merely examples, and may be changed as appropriate.

### Brief Description of the Reference Symbols

1: vessel
10: rotor sail (wind propulsion unit)
11: hull
40: rigid wing sail (wind propulsion unit)

## Claims

1. A vessel (1) comprising:
a hull (11); and
a plurality of wind propulsion units provided in the hull (11),
wherein the vessel (1) performs turning by generating a turning moment using the plurality of wind propulsion units.

2. The vessel (1) according to claim 1,
wherein the wind propulsion units are rotor sails (10, 10A, 10B, 10C, 10D).

3. The vessel (1) according to claim 1,
wherein an operation of the turning includes turning modes of tacking and jibing.

4. The vessel (1) according to claim 3,
wherein the vessel (1) switches the turning mode between the tacking and the jibing, based on sea conditions.

5. The vessel (1) according to claim 1,
wherein an operation of the turning includes an intermediate position (P5) of the operation, and
directions of the plurality of wind propulsion units during the operation of the turning are oriented in opposite directions with respect to the intermediate position (P5).

6. The vessel (1) according to claim 1,
wherein the hull (11) is provided with the plurality of wind propulsion units that are arranged in a front-rear direction between a bow side and a stern side.

7. The vessel (1) according to claim 1,
wherein the vessel (1) generates the turning moment by making lift generated by the wind propulsion unit located farthest from a center of gravity of the hull (11) greater than lift generated by the other wind propulsion units.
